# EUROPEAN PATENT APPLICATION

(11) **EP 4 300 299 A1**
(43) Date of publication of application: **03.01.2024**
(21) Application number: 21928198.7
(22) Date of filing: 13.08.2021
(51) Int. Cl.: G06F 9/455, G06F 9/451, G06F 15/78, B60R 16/023

(54) **VEHICULAR DISPLAY DEVICE**

(30) Priority: 26.02.2021 KR 20210026453; 23.04.2021 KR 20210053004
(71) Applicant: LG Electronics Inc., Yeongdeungpo-gu Seoul 07336 (KR)
(72) Inventor: YOON, Jaegu, Seoul 06772 (KR); LEE, Heemin, Seoul 06772 (KR); LIM, Sunhee, Seoul 06772 (KR); JEONG, Daeyoung, Seoul 06772 (KR); HAN, Dongwoo, Seoul 06772 (KR); LEE, Dongkyu, Seoul 06772 (KR); JUNG, Dukyung, Seoul 06772 (KR)
(74) Representative: Vossius & Partner Patentanwälte Rechtsanwälte mbB
(86) International application number: PCT/KR2021/010773
(87) International publication number: WO 2022/181904

(57) **Abstract**

Disclosed is a display apparatus including a first display and a second display located in a vehicle, a signal processing device including a processor for the first display and the second display, and a second signal processing device for a third display, wherein the processor executes first to third virtual machines on a hypervisor, and the first virtual machine is configured to transmit a remote processing request from at least one of the second virtual machine or the third virtual machine to the second signal processing device, receive image data processed by the second signal processing device in response to the remote processing request, and display an image related to the received image data on at least one of the first display or the second display.

## Description

### Technical field of the disclosure

The present disclosure relates to a display apparatus for vehicles, and more particularly to a display apparatus for vehicles capable of displaying images divided and processed by a plurality of signal processing devices in a vehicle.

### Background technology

A vehicle is an apparatus that a driver moves in a desired direction. A representative example of the vehicle is a car.

Meanwhile, a display apparatus for vehicles is located in the vehicle for convenience of users who use the vehicle.

For example, a display is disposed in a cluster in order to display various kinds of information. Meanwhile, in order to display vehicle driving information, various displays, such as an audio video navigation (AVN) display and a rear seat entertainment display, are located in the vehicle, in addition to the cluster.

As the number of displays in the display apparatus for vehicles is increased, as described above, a plurality of signal processing devices for a plurality of displays is used.

Meanwhile, when the plurality of signal processing devices for the plurality of displays is used, resources may be inefficiently managed if the signal processing devices do not share data.

### Detailed description of the invention

### Technical objectives

An object of the present disclosure is to provide a display apparatus for vehicles capable of displaying images divided and processed by a plurality of signal processing devices in a vehicle.

Another object of the present disclosure is to provide a display apparatus for vehicles capable of efficiently managing loads or resources in a plurality of signal processing devices for a plurality of displays in a vehicle.

Another object of the present disclosure is to provide a display apparatus for vehicles capable of performing high-speed data communication between a plurality of virtual machines or a plurality of signal processing devices.

A further object of the present disclosure is to provide a display apparatus for vehicles capable of performing high-speed data communication even though a plurality of virtual machines or a plurality of signal processing devices is executed by different operating systems.

### Technical solutions

In accordance with an aspect of the present disclosure, the above and other objects can be accomplished by the provision of a display apparatus for vehicles, the display apparatus including a first display and a second display located in a vehicle, a signal processing device including a processor configured to perform signal processing for the first display and the second display, and a second signal processing device including a second processor configured to perform signal processing for a third display, wherein the processor in the signal processing device executes first to third virtual machines on a hypervisor in the processor, and the first virtual machine is configured to transmit a remote processing request from at least one of the second virtual machine or the third virtual machine to the second signal processing device, receive image data processed by the second signal processing device in response to the remote processing request, and display an image related to the received image data on at least one of the first display or the second display.

Meanwhile, the second virtual machine may be operated for the first display, the third virtual machine may be operated for the second display, and in response to the remote processing request for image processing being received from at least one of the second virtual machine or the third virtual machine, the first virtual machine may be configured to transmit remote processing request to the second signal processing device, receive image data processed by the second signal processing device in response to the remote processing request, transmit the received image data to at least one of the second virtual machine or the third virtual machine, and display an image related to the image data on at least one of the first display or the second display.

Meanwhile, the first virtual machine may be configured to transmit remote processing request to a server virtual machine executed in the second signal processing device, the server virtual machine in the second signal processing device may be configured to process image data in a guest virtual machine in the second signal processing device in response to the remote processing request and may transmit the processed image data to the first virtual machine, and the first virtual machine may receive the image data processed by the second signal processing device and may be configured to display an image related to the received image data on at least one of the first display or the second display.

Meanwhile, the server virtual machine in the second signal processing device may sort image data to be processed by a plurality of guest virtual machines in the second signal processing device in consideration of load balancing or resource balancing of the plurality of guest virtual machines, and may transmit the sorted image data to be processed to the plurality of guest virtual machines.

Meanwhile, the first virtual machine may sort image data to be processed by the second signal processing device in consideration of load balancing or resource balancing of the second signal processing device, and may transmit the sorted image data to be processed to the second signal processing device.

Meanwhile, the signal processing device may further execute a distributed processing module configured to sort image data to be processed by the second signal processing device in consideration of load balancing or resource balancing of the second signal processing device and to transmit the sorted image data to be processed to the second signal processing device.

Meanwhile, the image data processed by the second signal processing device may include a rendering object.

Meanwhile, an operating system executed in the signal processing device and an operating system executed in the second signal processing device may be different from each other.

Meanwhile, the first virtual machine may combine image data processed by the signal processing device and the image data processed by the second signal processing device with each other, and may be configured to display a composite image on at least one of the first display or the second display.

Meanwhile, the first virtual machine may receive and process wheel speed sensor data of the vehicle, and may transmit the processed wheel speed sensor data to at least one of the second virtual machine or the third virtual machine, or the second signal processing device.

Meanwhile, the guest virtual machine in the second signal processing device may store the processed image data in a shared memory, and may transmit buffer index information in the shared memory to the server virtual machine in the second signal processing device.

Meanwhile, the server virtual machine in the second signal processing device may transmit the processed image data to the first virtual machine based on the buffer index information in the shared memory.

Meanwhile, the display apparatus may further include a third signal processing device including a third processor configured to perform signal processing for a fourth display, wherein the first virtual machine may be configured to transmit the remote processing request from at least one of the second virtual machine or the third virtual machine to the second signal processing device and the third signal processing device, may receive image data processed by each of the second signal processing device and the third signal processing device in response to the remote processing request, and may be configured to display an image related to the received image data on at least one of the first display or the second display.

Meanwhile, the first virtual machine may be configured to transmit remote processing request to a server virtual machine executed in each of the second signal processing device and the third signal processing device, the server virtual machine in the second signal processing device may be configured to process image data by a guest virtual machine in the second signal processing device in response to the remote processing request and may transmit the processed image data to the first virtual machine, the server virtual machine in the third signal processing device may be configured to process image data by a guest virtual machine in the third signal processing device in response to the remote processing request and may transmit the processed image data to the first virtual machine, and the first virtual machine may receive the image data processed by each of the second signal processing device and the third signal processing device and may be configured to display an image related to the received image data on at least one of the first display or the second display.

Meanwhile, the first virtual machine may sort image data to be processed by each of the second signal processing device and the third signal processing device in consideration of load balancing or resource balancing of each of the second signal processing device and the third signal processing device, and may transmit the sorted image data to be processed to each of the second signal processing device and the third signal processing device.

Meanwhile, the signal processing device may further execute a distributed processing module configured to sort image data to be processed by each of the second signal processing device and the third signal processing device in consideration of load balancing or resource balancing of each of the second signal processing device and the third signal processing device and to transmit the sorted image data to be processed to each of the second signal processing device and the third signal processing device.

In accordance with another aspect of the present disclosure, there is provided a display apparatus for vehicles, the display apparatus including a first display and a second display located in a vehicle, a signal processing device including a processor configured to perform signal processing for the first display and the second display, a second signal processing device including a second processor configured to perform signal processing for a third display, and a third signal processing device including a third processor configured to perform signal processing for a fourth display, wherein the processor in the signal processing device executes first to third virtual machines on a hypervisor in the processor, and the first virtual machine sorts image data to be processed by a plurality of guest virtual machines in consideration of load balancing or resource balancing of each of the second signal processing device and the third signal processing device, and transmits the sorted image data to be processed to each of the plurality of guest virtual machines.

Meanwhile, the first virtual machine may receive image data processed by each of the second signal processing device and the third signal processing device, and may be configured to display an image related to the received image data on at least one of the first display or the second display.

### Effects of the invention

A display apparatus for vehicles according to an embodiment of the present disclosure includes a first display and a second display located in a vehicle, a signal processing device including a processor configured to perform signal processing for the first display and the second display, and a second signal processing device including a second processor configured to perform signal processing for a third display, wherein the processor in the signal processing device executes first to third virtual machines on a hypervisor in the processor, and the first virtual machine is configured to transmit a remote processing request from at least one of the second virtual machine or the third virtual machine to the second signal processing device, receive image data processed by the second signal processing device in response to the remote processing request, and display an image related to the received image data on at least one of the first display or the second display. Consequently, images divided and processed by the plurality of signal processing devices in the vehicle may be displayed. In addition, the plurality of signal processing devices for the plurality of displays in the vehicle may efficiently manage loads or resources.

Meanwhile, the second virtual machine may be operated for the first display, the third virtual machine may be operated for the second display, and in response to the remote processing request for image processing being received from at least one of the second virtual machine or the third virtual machine, the first virtual machine may be configured to transmit remote processing request to the second signal processing device, receive image data processed by the second signal processing device in response to the remote processing request, transmit the received image data to at least one of the second virtual machine or the third virtual machine, and display an image related to the image data on at least one of the first display or the second display. Consequently, images divided and processed by the plurality of signal processing devices in the vehicle may be displayed. In addition, the plurality of signal processing devices for the plurality of displays in the vehicle may efficiently manage loads or resources.

Meanwhile, the first virtual machine may be configured to transmit remote processing request to a server virtual machine executed in the second signal processing device, the server virtual machine in the second signal processing device may be configured to process image data in a guest virtual machine in the second signal processing device in response to the remote processing request and may transmit the processed image data to the first virtual machine, and the first virtual machine may receive the image data processed by the second signal processing device and may be configured to display an image related to the received image data on at least one of the first display or the second display. Consequently, images divided and processed by the plurality of signal processing devices in the vehicle may be displayed. In addition, the plurality of signal processing devices for the plurality of displays in the vehicle may efficiently manage loads or resources.

Meanwhile, the server virtual machine in the second signal processing device may sort image data to be processed by a plurality of guest virtual machines in the second signal processing device in consideration of load balancing or resource balancing of the plurality of guest virtual machines, and may transmit the sorted image data to be processed to the plurality of guest virtual machines. Consequently, images divided and processed by the plurality of signal processing devices in the vehicle may be displayed. In addition, the plurality of signal processing devices for the plurality of displays in the vehicle may efficiently manage loads or resources.

Meanwhile, the first virtual machine may sort image data to be processed by the second signal processing device in consideration of load balancing or resource balancing of the second signal processing device, and may transmit the sorted image data to be processed to the second signal processing device. Consequently, images divided and processed by the plurality of signal processing devices in the vehicle may be displayed. In addition, the plurality of signal processing devices for the plurality of displays in the vehicle may efficiently manage loads or resources.

Meanwhile, the signal processing device may further execute a distributed processing module configured to sort image data to be processed by the second signal processing device in consideration of load balancing or resource balancing of the second signal processing device and to transmit the sorted image data to be processed to the second signal processing device. Consequently, images divided and processed by the plurality of signal processing devices in the vehicle may be displayed. In addition, the plurality of signal processing devices for the plurality of displays in the vehicle may efficiently manage loads or resources.

Meanwhile, the image data processed by the second signal processing device may include a rendering object. Consequently, the rendering object divided and processed by the plurality of signal processing devices in the vehicle may be displayed. In addition, the plurality of signal processing devices for the plurality of displays in the vehicle may efficiently manage loads or resources.

Meanwhile, an operating system executed in the signal processing device and an operating system executed in the second signal processing device may be different from each other. Consequently, high-speed data communication may be performed even though the plurality of virtual machines or the plurality of signal processing devices is executed by different operating systems.

Meanwhile, the first virtual machine may combine image data processed by the signal processing device and the image data processed by the second signal processing device with each other, and may be configured to display a composite image on at least one of the first display or the second display. Consequently, images divided and processed by the plurality of signal processing devices in the vehicle may be displayed. In addition, the plurality of signal processing devices for the plurality of displays in the vehicle may efficiently manage loads or resources.

Meanwhile, the first virtual machine may receive and process wheel speed sensor data of the vehicle, and may transmit the processed wheel speed sensor data to at least one of the second virtual machine or the third virtual machine, or the second signal processing device. Consequently, at least one virtual machine or the second signal processing device may share the wheel speed sensor data of the vehicle.

Meanwhile, the guest virtual machine in the second signal processing device may store the processed image data in a shared memory, and may transmit buffer index information in the shared memory to the server virtual machine in the second signal processing device. Consequently, images divided and processed by the plurality of signal processing devices in the vehicle may be displayed. In addition, the plurality of signal processing devices for the plurality of displays in the vehicle may efficiently manage loads or resources.

Meanwhile, the server virtual machine in the second signal processing device may transmit the processed image data to the first virtual machine based on the buffer index information in the shared memory. Consequently, images divided and processed by the plurality of signal processing devices in the vehicle may be displayed. In addition, the plurality of signal processing devices for the plurality of displays in the vehicle may efficiently manage loads or resources.

Meanwhile, the display apparatus may further include a third signal processing device including a third processor configured to perform signal processing for a fourth display, wherein the first virtual machine may be configured to transmit the remote processing request from at least one of the second virtual machine or the third virtual machine to the second signal processing device and the third signal processing device, may receive image data processed by each of the second signal processing device and the third signal processing device in response to the remote processing request, and may be configured to display an image related to the received image data on at least one of the first display or the second display. Consequently, images divided and processed by the plurality of signal processing devices in the vehicle may be displayed. In addition, the plurality of signal processing devices for the plurality of displays in the vehicle may efficiently manage loads or resources.

Meanwhile, the first virtual machine may be configured to transmit remote processing request to a server virtual machine executed in each of the second signal processing device and the third signal processing device, the server virtual machine in the second signal processing device may be configured to process image data by a guest virtual machine in the second signal processing device in response to the remote processing request and may transmit the processed image data to the first virtual machine, the server virtual machine in the third signal processing device may be configured to process image data by a guest virtual machine in the third signal processing device in response to the remote processing request and may transmit the processed image data to the first virtual machine, and the first virtual machine may receive the image data processed by each of the second signal processing device and the third signal processing device and may be configured to display an image related to the received image data on at least one of the first display or the second display. Consequently, images divided and processed by the plurality of signal processing devices in the vehicle may be displayed. In addition, the plurality of signal processing devices for the plurality of displays in the vehicle may efficiently manage loads or resources.

Meanwhile, the first virtual machine may sort image data to be processed by each of the second signal processing device and the third signal processing device in consideration of load balancing or resource balancing of each of the second signal processing device and the third signal processing device, and may transmit the sorted image data to be processed to each of the second signal processing device and the third signal processing device. Consequently, images divided and processed by the plurality of signal processing devices in the vehicle may be displayed. In addition, the plurality of signal processing devices for the plurality of displays in the vehicle may efficiently manage loads or resources.

Meanwhile, the signal processing device may further execute a distributed processing module configured to sort image data to be processed by each of the second signal processing device and the third signal processing device in consideration of load balancing or resource balancing of each of the second signal processing device and the third signal processing device and to transmit the sorted image data to be processed to each of the second signal processing device and the third signal processing device. Consequently, images divided and processed by the plurality of signal processing devices in the vehicle may be displayed. In addition, the plurality of signal processing devices for the plurality of displays in the vehicle may efficiently manage loads or resources.

A display apparatus for vehicles according to another embodiment of the present disclosure includes a first display and a second display located in a vehicle, a signal processing device including a processor configured to perform signal processing for the first display and the second display, a second signal processing device including a second processor configured to perform signal processing for a third display, and a third signal processing device including a third processor configured to perform signal processing for a fourth display, wherein the processor in the signal processing device executes first to third virtual machines on a hypervisor in the processor, and the first virtual machine sorts image data to be processed by a plurality of guest virtual machines in consideration of load balancing or resource balancing of each of the second signal processing device and the third signal processing device, and transmits the sorted image data to be processed to each of the plurality of guest virtual machines. Consequently, images divided and processed by the plurality of signal processing devices in the vehicle may be displayed. In addition, the plurality of signal processing devices for the plurality of displays in the vehicle may efficiently manage loads or resources. Meanwhile, the first virtual machine may receive image data processed by each of the second signal processing device and the third signal processing device, and may be configured to display an image related to the received image data on at least one of the first display or the second display. Consequently, images divided and processed by the plurality of signal processing devices in the vehicle may be displayed. In addition, the plurality of signal processing devices for the plurality of displays in the vehicle may efficiently manage loads or resources.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system executed in a signal processing device related to the present disclosure;
FIG. 5 is a view showing an example of a system executed in a signal processing device according to an embodiment of the present disclosure;
FIG. 6 is a view referred to in the description of operation of the system executed in the signal processing device according to the embodiment of the present disclosure;
FIG. 7 is a view showing an example of a system executed in the display apparatus for vehicles according to the embodiment of the present disclosure; and
FIGS. 8 to 14 are views referred to in the description of FIG. 7.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

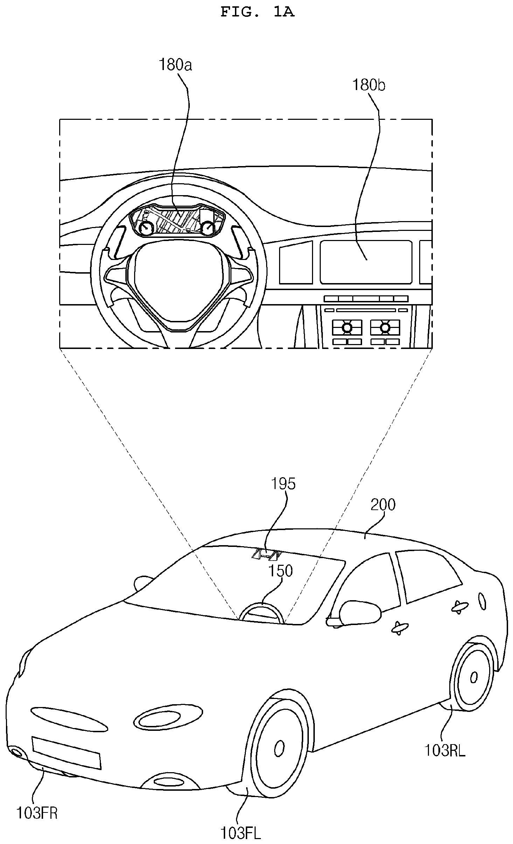

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

The embodiment of the present disclosure proposes a scheme for a display apparatus 100 for vehicles including a plurality of displays 180a and 180b to divide data processing.

Meanwhile, the vehicle 200 described in this specification may be a concept including all of a vehicle having an engine as a power source, a hybrid vehicle having an engine and an electric motor as a power source, and an electric vehicle having an electric motor as a power source.

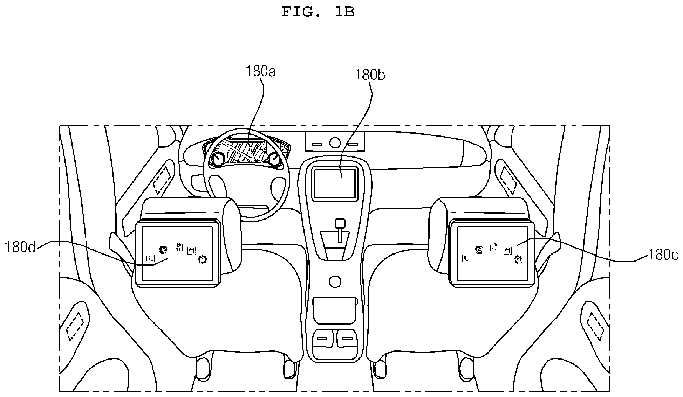

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be located in the vehicle.

The embodiment of the present disclosure proposes a scheme for a display apparatus 100 for vehicles including a plurality of displays 180a to 180d to divide data processing.

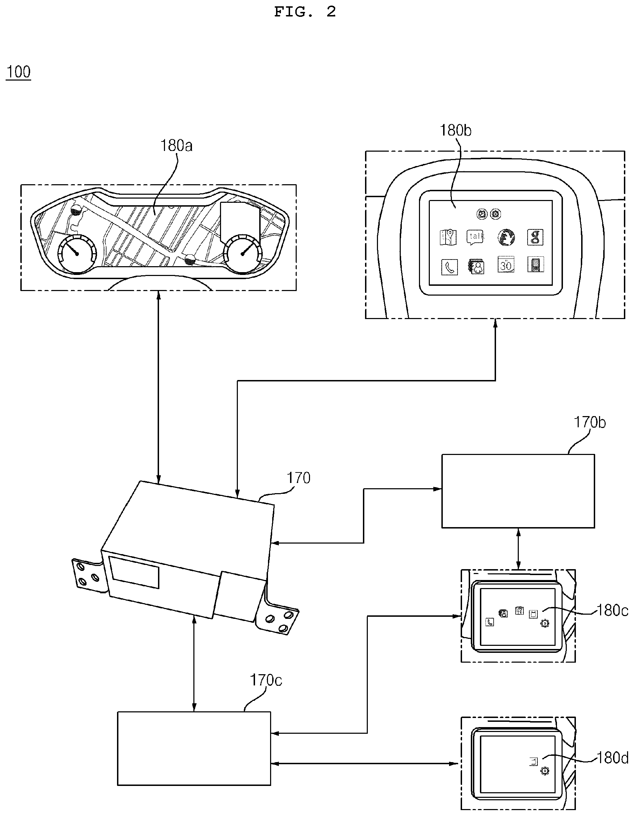

FIG. 2 is a view showing the external appearance of a display apparatus for vehicles according to an embodiment of the present disclosure.

The display apparatus 100 for vehicles according to the embodiment of the present disclosure may include a plurality of displays 180a and 180b, a signal processing device 170 configured to perform signal processing in order to display images and information on the plurality of displays 180a and 180b, a second signal processing device 170b configured to perform signal processing in order to display an image and information on a third display 180c, and a third signal processing device 170c configured to perform signal processing in order to display an image and information on a fourth display 180d.

The signal processing device 170, the second signal processing device 170b, and the third signal processing device 170c may be disposed spaced apart from each other.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The third display 180c may be a right rear seat entertainment display of the vehicle, and the fourth display 180d may be a left rear seat entertainment display of the vehicle.

The third display 180c may display driving state information, such as vehicle speed, simple navigation information, various kinds of entertainment information, or an image.

The fourth display 180d may display driving state information, such as vehicle speed, simple navigation information, various kinds of entertainment information, or an image.

Meanwhile, the signal processing device 170 may have a processor 175 provided therein, and first to third virtual machines 520 to 540 may be executed by a hypervisor 505 in the processor 175.

The first virtual machine 520 may correspond to a server virtual machine, and the second and third virtual machines may correspond to guest virtual machines.

Consequently, data communication may be performed between the first virtual machine 520 and the second or third virtual machine 530 or 540 according to a server interface and a client interface.

The second virtual machine 530 may be operated for the first display 180a, and the third virtual machine 540 may be operated for the second display 180b.

Meanwhile, the second signal processing device 170b may have a second processor 175b provided therein, and may execute a cartridge on the second processor 175b.

Alternatively, the second signal processing device 170b may have a second processor 175b provided therein, and may execute a server virtual machine 520b and guest virtual machines 530b and 540b on the second processor 175b.

Meanwhile, the third signal processing device 170c may have a third processor 175c provided therein, and may execute a cartridge on the third processor 175c.

Alternatively, the third signal processing device 170c may have a third processor 175c provided therein, and may execute a server virtual machine 520c and guest virtual machines 530c and 540c on the third processor 175c.

Meanwhile, the first virtual machine 520 in the processor 175 shares at least some of data with the second signal processing device 170b or the third signal processing device 170c for divided processing of data. Consequently, images divided and processed by the plurality of signal processing devices 170, 170b, and 170c in the vehicle may be displayed.

Meanwhile, the first virtual machine 520 in the processor 175 may receive and process wheel speed sensor data of the vehicle, and may transmit the processed wheel speed sensor data to at least one of the second virtual machine 530 or the third virtual machine 540, the second signal processing device 170b, or the third signal processing device 170c. Consequently, at least one virtual machine 520 and 530, the second signal processing device 170b, or the third signal processing device 170c may share the wheel speed sensor data of the vehicle.

Meanwhile, the first virtual machine 520 in the processor 175 writes some of data in a first shared memory 508a so as to be transmitted to the second virtual machine 530, and writes some other of data in the first shared memory 508a so as to be transmitted to the third virtual machine 540. The second virtual machine 530 and the third virtual machine 540 process the received data, and may be configured to write the processed data in a second shared memory 508b. Consequently, images divided and processed by the plurality of virtual machines in the vehicle may be displayed.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may display the same information or the same images in a synchronized state.

Meanwhile, the second signal processing device 170b may have a second processor 175b therein, and may execute a server virtual machine 520b and a guest virtual machine 530b on a hypervisor 505b in the second processor 175b.

Meanwhile, the third signal processing device 170c may have a third processor 175c therein, and may execute a server virtual machine 520c and a guest virtual machine 530c on a hypervisor 505c in the third processor 175c.

Meanwhile, some of the plurality of displays 180a to 180d may be operated based on a Linux Operating System (OS), some other may be operated based on a Web OS, and some other may be operated based on Android.

Meanwhile, the signal processing device 170, the second signal processing device 170b, and the third signal processing device 170c may be operated according to different operating systems (OS).

For example, the signal processing device 170 may be operated according to a Linux-based operating system, the second signal processing device 170b may be operated according to an Android-based operating system, and the third signal processing device 170c may be operated according to a Web OS-based operating system.

The signal processing device 170, the second signal processing device 170b, and the third signal processing device 170c according to the embodiment of the present disclosure may divide and process data for the displays 180a to 180d configured to be operated under various operating systems.

Meanwhile, the signal processing device 170, the second signal processing device 170b, and the third signal processing device 170c according to the embodiment of the present disclosure may be configured to also display the same information or the same images in a synchronized state on the displays 180a to 180d configured to be operated under various operating systems.

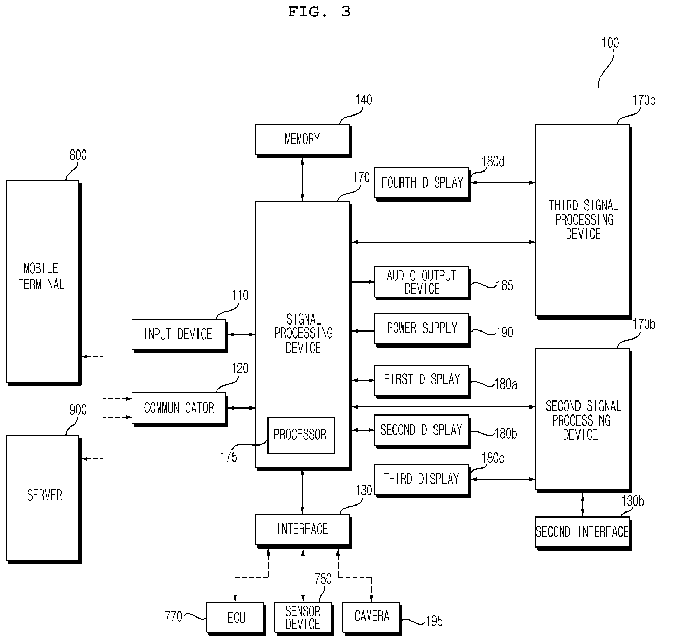

FIG. 3 illustrates an example of an internal block diagram of the display apparatus for vehicles according to the embodiment of the present disclosure.

Referring to the figure, the display apparatus 100 for vehicles according to the embodiment of the present disclosure may include an input device 110, a communicator 120, an interface 130, a second interface 130b, a memory 140, a signal processing device 170, a second signal processing device 170b, a third signal processing device 170c, a plurality of displays 180a to 180d, an audio output device 185, and a power supply 190.

The input device 110 may include a physical button or pad for button input or touch input.

Meanwhile, the input device 110 may include a microphone (not shown) for user voice input.

The communicator 120 may wirelessly exchange data with a mobile terminal 800 or a server 900.

In particular, the communicator 120 may wirelessly exchange data with a mobile terminal of a vehicle driver. Any of various data communication schemes, such as Bluetooth, Wi-Fi, WIFI Direct, and APIX, may be used as a wireless data communication scheme.

The communicator 120 may receive weather information and road traffic situation information, such as transport protocol expert group (TPEG) information, from the mobile terminal 800 or the server 900. To this end, the communicator 120 may include a mobile communication module (not shown).

The interface 130 may receive sensor information from an electronic control unit (ECU) 770 or a sensor device 760, and may transmit the received information to the signal processing device 170.

The second interface 130b may receive sensor information from the electronic control unit (ECU) 770 or the sensor device 760, and may transmit the received information to the second signal processing device 170b.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

The memory 140 may store various data necessary for overall operation of the display apparatus 100 for vehicles, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicles.

For example, the signal processing device 170 may include a processor 175 configured to perform signal processing for the displays 180a and 180b.

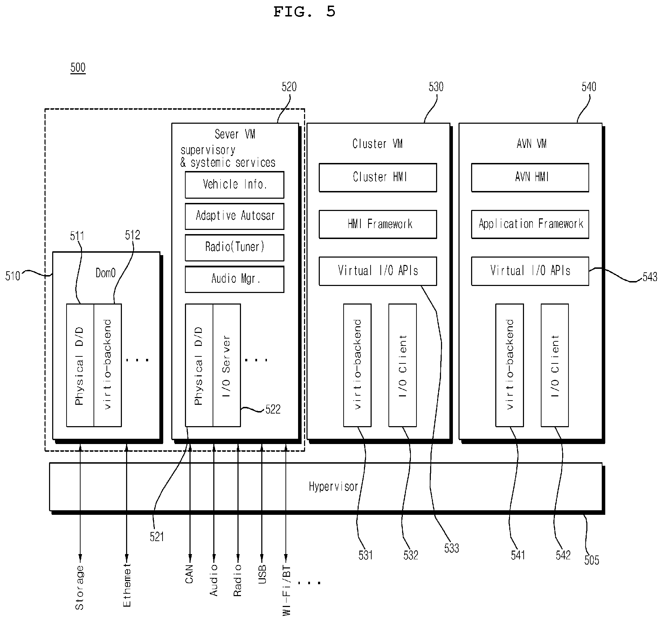

The processor 175 may execute the first to third virtual machines 520 to 540 on the hypervisor 505 (see FIG. 5) in the processor 175.

Among the first to third virtual machines 520 to 540 (see FIG. 5), the first virtual machine 520 may be called a server virtual machine, and the second and third virtual machines 530 and 540 may be called guest virtual machines.

The second virtual machine 530 may be operated for the first display 180a, and the third virtual machine 540 may be operated for the second display 180b.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 in the processor 175 writes some of data in the first shared memory 508a so as to be transmitted to the second virtual machine 530, and writes some other of data in the first shared memory 508a so as to be transmitted to the third virtual machine 540. The second virtual machine 530 and the third virtual machine 540 process the received data, and may be configured to write the processed data in the second shared memory 508b. Consequently, images divided and processed by the plurality of signal processing devices in the vehicle may be displayed.

At this time, data may be any one of image data, audio data, navigation data, and voice recognition data.

Meanwhile, the first virtual machine 520 may process some other of data, and may be configured to write the processed data in the second shared memory 508b. That is, the first virtual machine 520 may perform data processing in addition to the second virtual machine 530 and the third virtual machine 540.

Meanwhile, the first virtual machine 520 may create command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the first virtual machine 520 in the processor 175 may create one command queue. Consequently, the same data may be synchronized and shared.

Meanwhile, the first virtual machine 520 may create command queues corresponding to the number of virtual machines for distributed processing of data.

Meanwhile, the first virtual machine 520 may be configured to transmit write at least some of data to at least one of the second virtual machine 530 or the third virtual machine 540 or the second signal processing device 170b for distributed processing of data.

For example, the first virtual machine 520 may allocate the first shared memory 508a for transmitting at least some of data to at least one of the second virtual machine 530 or the third virtual machine 540 or the second signal processing device 170b, and image data processed by the second virtual machine 530 or the third virtual machine 540 may be written in the second shared memory 508b.

Meanwhile, the first virtual machine 520 may be configured to write data in the shared memory 508, whereby the second virtual machine 530 and the third virtual machine 540 share the same data.

For example, the first virtual machine 520 may be configured to write radio data or wireless communication data in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 and the third virtual machine 540.

That is, the first virtual machine 520 in the processor 175 may transmit the same data to the second virtual machine 530 and the third virtual machine 540 in a synchronized state using the shared memory 508 based on the hypervisor 505. Consequently, the plurality of displays 180a and 180b in the vehicle may display the same images in a synchronized state.

Meanwhile, the signal processing device 170 may process various signals, such as an audio signal, an image signal, and a data signal. To this end, the signal processing device 170 may be implemented in the form of a system on chip (SOC).

The second signal processing device 170b performs signal processing for the display 180c for vehicles, and may include a second processor 175b to this end.

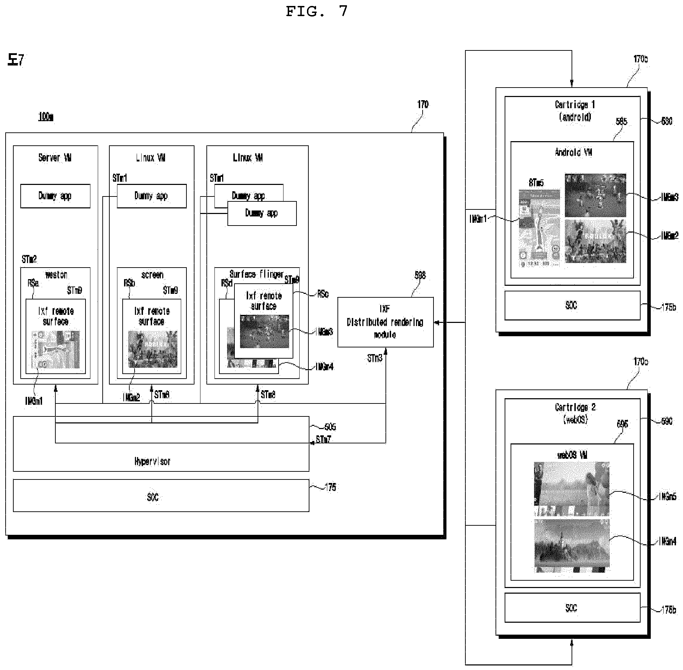

The second processor 175b may execute the server virtual machine 520b and the guest virtual machines 530b and 540b on the hypervisor 505b (FIG. 7) in the second processor 175b.

For example, the server virtual machine 520b in the second processor 175b may receive, process, and output vehicle sensor data, position information data, camera image data, audio data, or touch input data from the first virtual machine 520 in the processor 175 in the signal processing device 170.

As another example, the server virtual machine 520b may receive and process CAN communication data, audio data, radio data, USB data, and wireless communication data from the first virtual machine 520 in the processor 175 in the signal processing device 170 for the guest virtual machines 530b and 540b.

The server virtual machine 520b may transmit the processed data to the guest virtual machines 530b and 540b.

Consequently, only the server virtual machine 520b, among the server virtual machine 520b and the guest virtual machines 530b and 540b, may receive communication data and external input data, and may perform signal processing, whereby signal processing load of the guest virtual machines 530b and 540b may be reduced and 1:N data communication may be achieved, and therefore synchronization at the time of data sharing may be achieved.

Meanwhile, the server virtual machine 520b writes some of data in the shared memory 508b so as to be transmitted to the guest virtual machine 530b, and the guest virtual machines 530b and 540b process the received data, and may be configured to write the processed data in the shared memory 508b. Consequently, images divided and processed by the plurality of signal processing devices in the vehicle may be displayed.

At this time, data may be any one of image data, audio data, navigation data, and voice recognition data.

Meanwhile, the server virtual machine 520b may create command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the server virtual machine 520b in the second processor 175b may create one command queue. Consequently, the same data may be synchronized and shared.

Meanwhile, the server virtual machine 520b may create command queues corresponding to the number of virtual machines for distributed processing of data.

Meanwhile, the server virtual machine 520b may be configured to transmit write at least some of data to at least one of the guest virtual machines 530b or 540b for distributed processing of data.

For example, the server virtual machine 520b may allocate the shared memory 508b for transmitting at least some of data to at least one of the guest virtual machines 530b or 540b, and image data processed by the guest virtual machine 530b or the guest virtual machine 540b may be written in the shared memory 508b.

Meanwhile, the server virtual machine 520b may be configured to write data in the shared memory 508b, whereby the guest virtual machines 530b and 540b share the same data.

For example, the server virtual machine 520b may be configured to write radio data or wireless communication data in the shared memory 508b, whereby the guest virtual machines 530b and 540b share the same data. Consequently, 1:N data sharing may be achieved.

Eventually, the server virtual machine 520b may process most of the data, whereby 1:N data sharing may be achieved.

Meanwhile, the server virtual machine 520b in the second processor 175b may be configured to set the shared memory 508b based on the hypervisor 505b in order to transmit the same data to the guest virtual machines 530b and 540b.

That is, the server virtual machine 520b in the second processor 175b may transmit the same data to the guest virtual machines 530b and 540b in a synchronized state using the shared memory 508b based on the hypervisor 505b. Consequently, the plurality of displays 180c and 180d in the vehicle may display the same images in a synchronized state.

Meanwhile, the second signal processing device 170b may process various signals, such as an audio signal, an image signal, and a data signal. To this end, the second signal processing device 170b may be implemented in the form of a system on chip (SOC).

The third signal processing device 170c performs signal processing for the display 180d for vehicles, and may include a third processor 175c to this end.

The third processor 175c may execute the server virtual machine 520c and the guest virtual machines 530c and 540c on the hypervisor 505c in the third processor 175c.

For example, the server virtual machine 520c in the third processor 175c may receive, process, and output vehicle sensor data, position information data, camera image data, audio data, or touch input data from the first virtual machine 520 in the processor 175 in the signal processing device 170.

As another example, the server virtual machine 520c may receive and process CAN communication data, audio data, radio data, USB data, and wireless communication data from the first virtual machine 520 in the processor 175 in the signal processing device 170 for the guest virtual machines 530c and 540c.

The server virtual machine 520c may transmit the processed data to the guest virtual machines 530c and 540c.

Consequently, only the server virtual machine 520c, among the server virtual machine 520c and the guest virtual machines 530c and 540c, may receive communication data and external input data, and may perform signal processing, whereby signal processing load of the guest virtual machines 530c and 540c may be reduced and 1:N data communication may be achieved, and therefore synchronization at the time of data sharing may be achieved.

Meanwhile, the server virtual machine 520c writes some of data in the shared memory 508c so as to be transmitted to the guest virtual machine 530c, and the guest virtual machines 530c and 540c process the received data, and may be configured to write the processed data in the shared memory 508c. Consequently, images divided and processed by the plurality of signal processing devices in the vehicle may be displayed.

At this time, data may be any one of image data, audio data, navigation data, and voice recognition data.

Meanwhile, the server virtual machine 520c may create command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the server virtual machine 520c in the third processor 175c may create one command queue. Consequently, the same data may be synchronized and shared.

Meanwhile, the server virtual machine 520c may create command queues corresponding to the number of virtual machines for distributed processing of data.

Meanwhile, the server virtual machine 520c may be configured to transmit write at least some of data to at least one of the guest virtual machines 530c or 540c for distributed processing of data.

For example, the server virtual machine 520c may allocate the shared memory 508c for transmitting at least some of data to at least one of the guest virtual machines 530c or 540c, and image data processed by the guest virtual machine 530c or the guest virtual machine 540c may be written in the shared memory 508c.

Meanwhile, the server virtual machine 520c may be configured to write data in the shared memory 508c, whereby the guest virtual machines 530c and 540c share the same data.

For example, the server virtual machine 520c may be configured to write radio data or wireless communication data in the shared memory 508c, whereby the guest virtual machines 530c and 540c share the same data. Consequently, 1:N data sharing may be achieved.

Eventually, the server virtual machine 520c may process most of the data, whereby 1:N data sharing may be achieved.

Meanwhile, the server virtual machine 520c in the third processor 175c may be configured to set the shared memory 508c based on the hypervisor 505c in order to transmit the same data to the guest virtual machines 530c and 540c.

That is, the server virtual machine 520c in the third processor 175c may transmit the same data to the guest virtual machines 530c and 540c in a synchronized state using the shared memory 508c based on the hypervisor 505c. Consequently, the plurality of displays 180c and 180d in the vehicle may display the same images in a synchronized state.

Meanwhile, the third signal processing device 170c may process various signals, such as an audio signal, an image signal, and a data signal. To this end, the third signal processing device 170c may be implemented in the form of a system on chip (SOC).

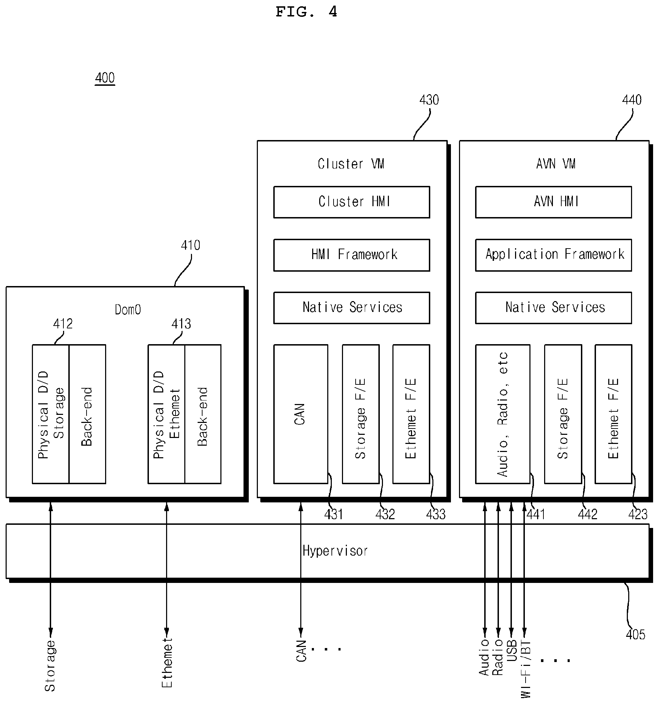

FIG. 4 is a view showing a system executed in a signal processing device related to the present disclosure.

Referring to the figure, FIG. 4 is a view illustrating that virtual machines are used for the cluster display 180a and the AVN display 180b.

The system 400 executed in the signal processing device of FIG. 4 illustrates that a cluster virtual machine 430 and an AVN virtual machine 440 are executed on a hypervisor 405 in the processor 175 in the signal processing device 170.

Meanwhile, the system 400 executed in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view showing an example of a system executed in a signal processing device according to an embodiment of the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 executed in the signal processing device 170 of FIG. 5 illustrates that a legacy virtual machine 510 is also executed on the hypervisor 505 in the processor 175.

The legacy virtual machine 510 may include an interface 511 for data communication with the memory 140 and Ethernet communication.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 and Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 and Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

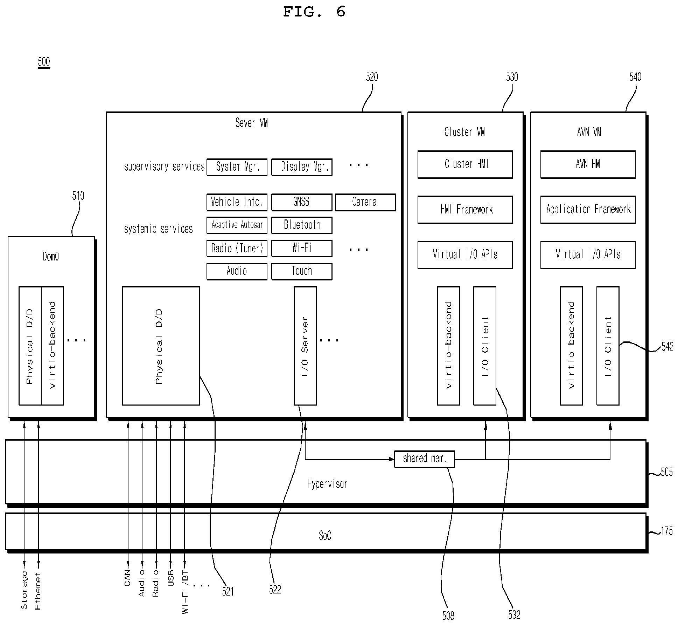

FIG. 6 is a view referred to in the description of operation of the system executed in the signal processing device according to the embodiment of the present disclosure.

Referring to the figure, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of the same data to the second and third virtual machines 530 and 540.

For example, the same image data may be illustrated as the same data. Consequently, the plurality of displays 180a and 180b in the vehicle may display the same images in a synchronized state.

Meanwhile, in the system 500 of FIG. 6, the processor 175 in the signal processing device 170 executes the first to third virtual machines 520 to 540 on the hypervisor 505 in the processor 175, and the first virtual machine 520 in the processor 175 may transmit the same data to the second and third virtual machines 530 and 540 in a synchronized state using the shared memory 508 based on the hypervisor 505.

For example, CAN communication data, audio data, radio data, USB data, wireless communication data, position information data, or touch data may be illustrated as the same data. Consequently, the plurality of displays 180a and 180b in the vehicle may display the same data in a synchronized state.

Meanwhile, although not shown in FIG. 6, the legacy virtual machine 510 may transmit memory data from the memory 140 and Ethernet data by Ethernet communication to the second and third virtual machines 530 and 540 in a synchronized state using the shared memory 508 based on the hypervisor 505. That is, it is possible to perform 1:N data communication with respect to the memory data or the Ethernet data, whereby it is possible to transmit the same data in a synchronized state.

Meanwhile, in response to the virtual machines being used in order to display images requiring lots of resources, such as rendering of a 3D application, in the display apparatus 100 for vehicles, the virtual machines share graphical resources. In response to a heavy application being executed in the virtual machine, therefore, graphics processing unit (GPU) resources may be deficient.

In the embodiment of the present disclosure, therefore, a distributed rendering technique of performing image rendering using the signal processing devices 170b and 170c except the signal processing device 170 and receiving the result of image rendering is used.

To this end, a display apparatus 100 for vehicles according to an embodiment of the present disclosure includes a signal processing device 170 including a processor 175 configured to perform signal processing for a first display 180a and a second display 180b and a second signal processing device 170b including a second processor 175b configured to perform signal processing for a third display 180c, wherein the processor 175 in the signal processing device 170 executes first to third virtual machines 520 to 540 on a hypervisor 505 in the processor 175, the first virtual machine 520 is configured to transmit a remote processing request from at least one of the second virtual machine or the third virtual machine 530 and 540 to the second signal processing device 170b, receive image data processed by the second signal processing device 170b in response to the remote processing request, and display an image related to the received image data on at least one of the first display 180a or the second display 180b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, the second virtual machine 530 may be operated for the first display 180a, the third virtual machine 550 may be operated for the second display 180b, and in response to a remote processing request for image processing being received from at least one of the second virtual machine or the third virtual machine 530 and 540, the first virtual machine 520 may be configured to transmit remote processing request to the second signal processing device 170b, may receive image data processed by the second signal processing device 170b in response to the remote processing request, may transmit the received image data to at least one of the second virtual machine or the third virtual machine 530 and 540, and may perform control such that an image related to the image data is displayed on at least one of the first display 180a or the second display 180b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, the first virtual machine 520 may be configured to transmit remote processing request to a server virtual machine 520b executed in the second signal processing device 170b, the server virtual machine 520b in the second signal processing device 170b may be configured to process image data in guest virtual machines 530b and 540b in the second signal processing device 170b in response to the remote processing request and may transmit the processed image data to the first virtual machine 520, and the first virtual machine 520 may receive the image data processed by the second signal processing device 170b and may be configured to display an image related to the received image data on at least one of the first display 180a or the second display 180b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, the server virtual machine 520b in the second signal processing device 170b may sort image data to be processed by the plurality of guest virtual machines 530b and 540b in consideration of load balancing or resource balancing of the plurality of guest virtual machines 530b and 540b in the second signal processing device 170b, and may transmit the sorted image data to be processed to the plurality of guest virtual machines 530b and 540b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, the first virtual machine 520 may sort image data to be processed by the second signal processing device 170b in consideration of load balancing or resource balancing of the second signal processing device 170b, and may transmit the sorted image data to be processed to the second signal processing device 170b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, the operating system executed in the signal processing device 170 and the operating system executed in the second signal processing device 170b may be different from each other. Consequently, high-speed data communication may be performed even though the plurality of virtual machines or the plurality of signal processing devices 170 and 170b is executed by different operating systems.

Meanwhile, the first virtual machine 520 may combine the image data processed by the signal processing device 170 and the image data processed by the second signal processing device 170b with each other, and may be configured to display a composite image on at least one of the first display 180a or the second display 180b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources. This will be described with reference to FIG. 7 or subsequent figures.

FIG. 7 is a view showing an example of a system executed in the display apparatus for vehicles according to the embodiment of the present disclosure.

Referring to the figure, the display apparatus 100 for vehicles according to the embodiment of the present disclosure includes a signal processing device 170 including a processor 175 configured to perform signal processing for a first display 180a and a second display 180b and a second signal processing device 170b including a second processor 175b configured to perform signal processing for a third display 180c.

The processor 175 in the signal processing device 170 executes first to third virtual machines 520 to 540 on a hypervisor 505 in the processor 175.

Meanwhile, the signal processing device 170 may execute a distributed processing module 598 configured to sort image data to be processed by the second signal processing device 170b in consideration of load balancing or resource balancing of the second signal processing device 170b and to transmit the sorted image data to be processed to the second signal processing device 170b.

Meanwhile, the second signal processing device 170b may execute a cartridge 580, and may execute a virtual machine 585 in the cartridge 580. The cartridge 580 or the virtual machine 585 executed in the second signal processing device 170b may be an Android-based cartridge or virtual machine.

Meanwhile, the third signal processing device 170c may execute a cartridge 590, and may execute a virtual machine 595 in the cartridge 590. The cartridge 590 or the virtual machine 595 executed in the third signal processing device 170c may be a Web OS-based cartridge or virtual machine.

The figure illustrates that a dummy application and an image-related application (Weston or Surface Flinger) are executed in each of the first to third virtual machines 520 to 540.

First, in response to the dummy application being executed, the second and third virtual machines 530 and 540 transmit a remote processing request to the first virtual machine 520 (STm1).

Subsequently, the first virtual machine 520 receive load information and resource information of each of the second signal processing device 170b and the third signal processing device 170c.

The first virtual machine 520 may check a signal processing device or a virtual machine in the signal processing device having available loads or resources based on the load information and resource information of each of the second signal processing device 170b and the third signal processing device 170c (STm2).

The first virtual machine 520 is configured to transmit the remote processing request to the distributed processing module 598 (STm3).

The distributed processing module 598 transmits the remote processing request to the signal processing device or a virtual machine in the signal processing device having available loads or resources (STm4).

For example, the distributed processing module 598 transmits the remote processing request only to the second signal processing device 170b.

As another example, as shown in the figure, the distributed processing module 598 transmits the remote processing request to each of the second signal processing device 170b and the third signal processing device 170c.

Subsequently, the second signal processing device 170b may process image data through the application executed in the virtual machine 585 therein according to the received remote processing request (STm5).

Meanwhile, the processed image data may include a rendering object.

That is, the second signal processing device 170b may process a rendering object or a rendering image through the application executed in the virtual machine 585 therein according to the received remote processing request.

Meanwhile, the third signal processing device 170c may process image data through the application executed in the virtual machine 595 therein according to the received remote processing request.

That is, the third signal processing device 170c may process a rendering object or a rendering image through the application executed in the virtual machine 595 therein according to the received remote processing request.

Subsequently, the second signal processing device 170b transmits the processed image data IMGm1 to IMGm3 to the distributed processing module 598 (STm6).

Meanwhile, the third signal processing device 170c transmits the processed image data IMGm4 and IMGm5 to the distributed processing module 598.

Subsequently, the distributed processing module 598 transmits the processed image data IMGm1 to IMGm5 received from the second signal processing device 170b and the third signal processing device 170c to the first virtual machine 520 (STm7).

Subsequently, the first virtual machine 520 is configured to transmit the processed image data IMGm1 to IMGm5 to the first virtual machine 520, the second virtual machine 530, and the third virtual machine 540 (STm8).

The figure illustrates that, among the processed image data IMGm1 to IMGm5, the first image data IMGm1 are transmitted to the first virtual machine 520, the second image data IMGm2 are transmitted to the second virtual machine 530, and the third image data IMGm3 and the fourth image data IMGm4 are transmitted to the third virtual machine 540.

Subsequently, the second virtual machine 530 and the third virtual machine 540 may be configured to combine the received image data with self-processed image data, and display composite images on the displays 180a and 180c, respectively, (STm9).

For example, a composite image including the second image data IMGm2 may be displayed on the first display 180a under control of the second virtual machine 530.

As another example, a composite image including the third image data IMGm3 and the fourth image data IMGm4 may be displayed on the second display 180b under control of the third virtual machine 540.

Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, a first virtual machine 520 according to an embodiment of the present disclosure may perform control such that the remote processing request from at least one of the second virtual machine or the third virtual machine 530 and 540 is transmitted to the second signal processing device 170b and the third signal processing device 170c, may receive image data processed by the second signal processing device 170b and the third signal processing device 170c in response to the remote processing request, and may be configured to display an image related to the received image data on at least one of the first display 180a or the second display 180b.

Consequently, images divided and processed by the plurality of signal processing devices 170 and 170b in the vehicle may be displayed.

Meanwhile, the first virtual machine 520 may sort image data to be processed by each of the second signal processing device 170b and the third signal processing device 170c in consideration of load balancing or resource balancing of each of the second signal processing device 170b and the third signal processing device 170c, and may transmit the sorted image data to be processed to each of the second signal processing device 170b and the third signal processing device 170c. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, the figure illustrates that the distributed processing module 598 is executed separately in the signal processing device 170. Alternatively, the function of the distributed processing module 598 may be executed in the first virtual machine 520.

That is, a first virtual machine 520 according to anther embodiment of the present disclosure may sort image data to be processed by the plurality of virtual machines 530b and 540b in consideration of load balancing or resource balancing of the second signal processing device 170b and the third signal processing device 170c, and may transmit the sorted image data to be processed to each of the plurality of virtual machines 530b and 540b.

Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

Meanwhile, the first virtual machine may receive image data processed by each of the second signal processing device 170b and the third signal processing device 170c, and may be configured to display an image related to the received image data on at least one of the first display 180a or the second display 180b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

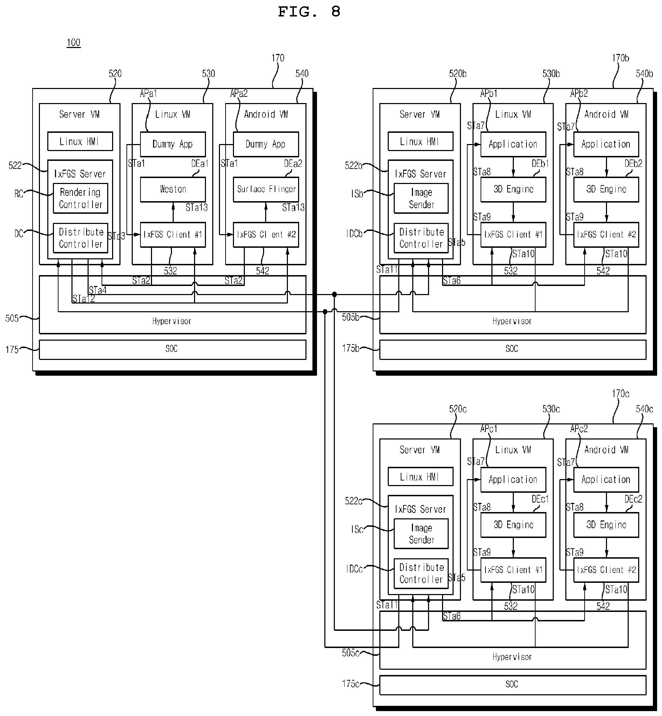

Meanwhile, the first virtual machine 520 may be configured to transmit remote processing request to the server virtual machine 520b executed in each of the second signal processing device 170b and the third signal processing device 170c, the server virtual machine 520b in the second signal processing device 170b may be configured to process image data by the guest virtual machines 530b and 540b in the second signal processing device 170b in response to the remote processing request and may transmit the processed image data to the first virtual machine 520, the server virtual machine 520b in the third signal processing device 170c may be configured to process image data by the guest virtual machines 530c and 540c in the third signal processing device 170c in response to the remote processing request and may transmit the processed image data to the first virtual machine 520, and the first virtual machine 520 may receive the image data processed by each of the second signal processing device 170b and the third signal processing device 170c and may be configured to display an image related to the received image data on at least one of the first display 180a or the second display 180b. This will be described with reference to FIG. 8.

FIGS. 8 to 14 are views referred to in the description of FIG. 7.

First, FIG. 8 is a view showing another example of the system executed in the display apparatus for vehicles according to the embodiment of the present disclosure.

Referring to the figure, a display apparatus 100 for vehicles according to an embodiment of the present disclosure includes a signal processing device 170 including a processor 175 configured to perform signal processing for a first display 180a and a second display 180b, a second signal processing device 170b including a second processor 175b configured to perform signal processing for a third display 180c, and a third signal processing device 170c including a third processor 175c configured to perform signal processing for a fourth display 180d.

The processor 175 in the signal processing device 170 executes a first virtual machine 520, which is a server virtual machine, and second and third virtual machines 530 and 540, which are guest virtual machines, on a hypervisor 505 in the processor 175.

The second processor 175b in the second signal processing device 170b executes a server virtual machine 510b and guest virtual machines 530b and 540b on a hypervisor 505b in the second processor 175b.

The third processor 175c in the third signal processing device 170c executes server virtual machine 510c and guest virtual machines 530c and 540c on a hypervisor 505c in the third processor 175c.

The figure illustrates that dummy applications Apa1 and Apa2 are executed in the second and third virtual machines 530 and 540, respectively.

First, in response to the dummy applications Apa1 and Apa2 being executed (STa1), the second and third virtual machines 530 and 540 transmit a remote processing request to the first virtual machine 520 (STa2).

Specifically, input and output client interfaces 532 and 542 in the second and third virtual machines 530 and 540 transmit the remote processing request to an input and output server interface 522 in the first virtual machine 520.

Meanwhile, the input and output server interface 522 in the first virtual machine 520 may include a rendering controller RC configured to perform rendering control and a distribute controller DC configured to perform distributed control.

Meanwhile, the first virtual machine 520 receives load information or resource information of each of the second signal processing device 170b and the third signal processing device 170c.

Subsequently, the distribute controller DC in the input and output server interface 522 in the first virtual machine 520 receives the remote processing request (STa3).

The input and output server interface 522 in the first virtual machine 520 may sort image data to be processed by the second signal processing device 170b and the third signal processing device 170c in consideration of load balancing or resource balancing of each of the second signal processing device 170b and the third signal processing device 170c, based on load information or resource information thereof, and may create a request message including content about the sorted image data to be processed.

The input and output server interface 522 in the first virtual machine 520 may transmit the request message to the second signal processing device 170b and the third signal processing device 170c (STa4).

The server virtual machines 520b and 520c in the second signal processing device 170b and the third signal processing device 170c may include input and output server interfaces 522b and 522c, respectively.

The input and output server interfaces 522b and 522c in the second signal processing device 170b and the third signal processing device 170c may receive the request message, and may distribute the request message so as to be processed by the guest virtual machines 530b, 540b, 530c, and 540c (STa5).

Subsequently, the input and output server interfaces 522b and 522c in the second signal processing device 170b and the third signal processing device 170c receive divided request messages, and transmit the divided request messages to the guest virtual machines 530b, 540b, 530c, and 540c (STa6).

Applications APb1, APb2, APc1, and APc2 in the guest virtual machines 530b, 540b, 530c, and 540c receive and process the request message (STa7).

Specifically, input and output client interfaces 532b, 542b, 532c, and 542c in the guest virtual machines 530b, 540b, 530c, and 540c receive the request message, and transmit the request message to the applications APb1, APb2, APc1, and APc2, respectively.

The applications APb1, APb2, APc1, and APc2 receive and process the request message.

Image processing engines DEb1, DEb2, DEc1, and DEc2 in the guest virtual machines 530b, 540b, 530c, and 540c process image data based on the received request message (STa8).

That is, the image processing engines DEb1, DEb2, DEc1, and DEc2 in the guest virtual machines 530b, 540b, 530c, and 540c perform image rendering based on the received request message. At this time, an image object may be rendered.

Subsequently, the input and output client interfaces 532b, 542b, 532c, and 542c in the guest virtual machines 530b, 540b, 530c, and 540c receive the processed image data, and transmit the processed image data to the input and output server interfaces 522b and 522c (STa9).

Subsequently, the input and output server interfaces 522b and 522c in the second signal processing device 170b and the third signal processing device 170c transmit the processed image data to the input and output server interface 522 in the first virtual machine 520 in the signal processing device 170 (STa10).

The input and output server interface 522 in the first virtual machine 520 is configured to transmit the received processed image data to the second and third virtual machines 530 and 540 (STa10).

Consequently, the input and output client interfaces 532 and 542 in the second and third virtual machines 530 and 540 receive the processed image data, and transmit the processed image data to applications DEal and DEa2 that are executed.

The applications DEal and DEa2 that are executed in the second and third virtual machines 530 and 540 may be configured to display a related image using the processed image data (STa11).

For example, the second virtual machine 530 and the third virtual machine 540 may be configured to combine the received image data with self-processed image data, and display composite images on the displays 180a and 180c, respectively.

Consequently, images divided and processed by the plurality of signal processing devices 170, 170b, and 170c in the vehicle may be displayed. In addition, the plurality of signal processing devices 170, 170b, and 170c for the plurality of displays 180a to 180d in the vehicle may efficiently manage loads or resources.

Meanwhile, the guest virtual machine in the second signal processing device 170b may store the processed image data in a shared memory 508b, and may transmit buffer index information in the shared memory 508b to the server virtual machine 520b in the second signal processing device 170b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources.

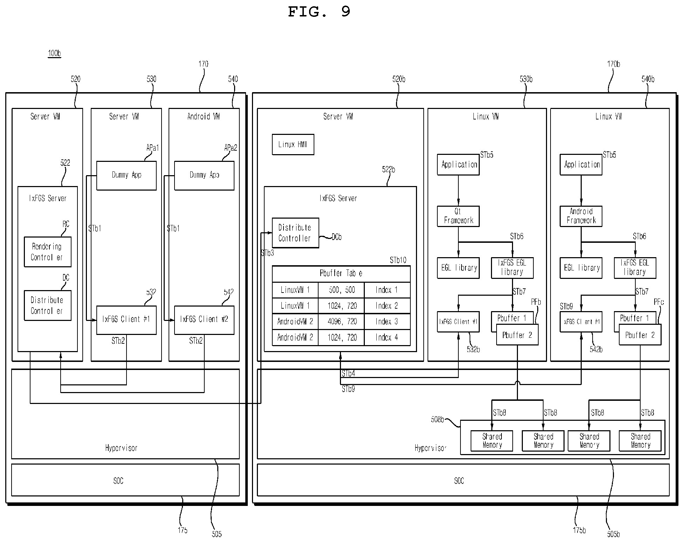

Meanwhile, the server virtual machine 520b in the second signal processing device 170b may transmit the processed image data to the first virtual machine 520 based on the buffer index information in the shared memory 508b. Consequently, images divided and processed by the plurality of signal processing devices 170 and 170b in the vehicle may be displayed. In addition, the plurality of signal processing devices 170 and 170b for the plurality of displays 180a to 180d in the vehicle may efficiently manage loads or resources. This will be described with reference to FIG. 9 and subsequent figures.

Next, FIG. 9 is a view showing another example of the system executed in the display apparatus for vehicles according to the embodiment of the present disclosure. In particular, this figure is referred to in order to describe execution of an application in the second signal processing device 170b.

Referring to the figure, a display apparatus 100 for vehicles according to an embodiment of the present disclosure includes a signal processing device 170 including a processor 175 configured to perform signal processing for a first display 180a and a second display 180b and a second signal processing device 170b including a second processor 175b configured to perform signal processing for a third display 180c.

The processor 175 in the signal processing device 170 executes a first virtual machine 520, which is a server virtual machine, and second and third virtual machines 530 and 540, which are guest virtual machines, on a hypervisor 505 in the processor 175.

The second processor 175b in the second signal processing device 170b executes a server virtual machine 510b and guest virtual machines 530b and 540b on a hypervisor 505b in the second processor 175b.

The figure illustrates that dummy applications Apa1 and Apa2 are executed in the second and third virtual machines 530 and 540, respectively.

First, in response to the dummy applications Apa1 and Apa2 being executed in the second and third virtual machines 530 and 540, respectively, the dummy applications Apa1 and Apa2 transmit a remote processing request to input and output client interfaces 532 and 542, respectively, (STb1).

Subsequently, the input and output client interfaces 532 and 542 transmit the remote processing request to an input and output server interface 522 in the first virtual machine 520 (STb2).

Meanwhile, the input and output server interface 522 in the first virtual machine 520 may sort image data to be processed by the second signal processing device 170b in consideration of load balancing or resource balancing of the second signal processing device 170b, based on load information or resource information thereof, and may create a request message including content about the sorted image data to be processed and an application execution request.

Subsequently, the input and output server interface 522 in the first virtual machine 520 is configured to transmit the request message to a server interface 522b in a server virtual machine 520b in the second signal processing device 170b (STb3).

In particular, the request message is transmitted to a distribute controller DCb in the input and output server interface 522b.

At this time, the request message may include ID information of the first virtual machine and resolution information of image data to be processed.

Subsequently, the server interface 522b in the server virtual machine 520b may register the request message in a buffer table therein, and may transmit the request message so as to be processed by the guest virtual machines 530b and 540b (STb4).

Subsequently, each of the guest virtual machines 530b and 540b in the second signal processing device 170b may execute an application in response to the request message (STb5).

In particular, an application may be executed in response to the application execution request in the request message.

Meanwhile, in each of the guest virtual machines 530b and 540b, an application, a frame work, a library, and input and output client interfaces 532b and 542b may be executed.

Meanwhile, at the time of creating a surface, each of the guest virtual machines 530b and 540b transmits the request message to an interface-related library (STb6), and creates width and height related to image data to be processed through a buffer (STb7).

Subsequently, each of the guest virtual machines 530b and 540b maps and stores information corresponding to the buffer in a shared memory 508b (STb8).

Subsequently, each of the guest virtual machines 530b and 540b transmits buffer index information and surface information in the shared memory 508b to the server virtual machine 520b (STb9).

At this time, the surface information may correspond to the processed image data information.

Subsequently, the server virtual machine 520b updates the buffer table therein based on the received buffer index information and surface information (STb10).

The server virtual machine 520b may transmit information about the updated buffer table, i.e. the processed image data, to the input and output server interface 522 in the first virtual machine 520.

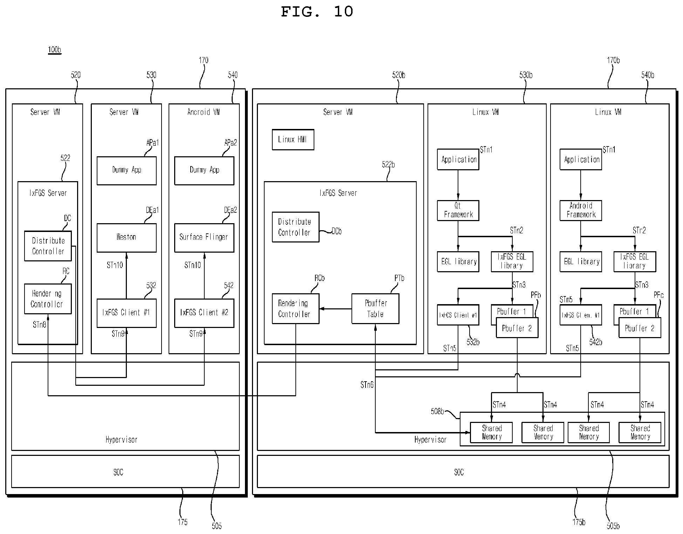

Next, FIG. 10 is a view showing another example of the system executed in the display apparatus for vehicles according to the embodiment of the present disclosure. In particular, this figure is referred to in order to describe rendering in the second signal processing device 170b.

Referring to the figure, each of the guest virtual machines 530b and 540b in the second signal processing device 170b executes an application in response to the request message.

The application in each of the guest virtual machines 530b and 540b in the second signal processing device 170b renders an application frame (STn1).

Subsequently, each of the guest virtual machines 530b and 540b performs object rendering using the interface-related library (STn2).

Subsequently, each of the guest virtual machines 530b and 540b writes the rendered content in a buffer in each guest virtual machine (STn3).

Subsequently, each of the guest virtual machines 530b and 540b maps and stores information corresponding to the buffer in the shared memory 508b (STn4).

Subsequently, each of the guest virtual machines 530b and 540b transmits buffer index information in the shared memory 508b to the server virtual machine 520b (STn5).

Subsequently, the server virtual machine 520b receives the processed data from the shared memory 508b based on the received buffer index information (STn6).

Subsequently, the server virtual machine 520b converts the data from the shared memory 508b into an image, and transmits the processed image data to the input and output server interface 522 in the first virtual machine 520 (STn7).

Subsequently, the rendering controller RC in the first virtual machine 520 buffers the received image data (STn8).

Subsequently, the input and output server interface 522 in the first virtual machine 520 is configured to transmit the result of buffering to the input and output client interfaces 532 and 542 in the second and third virtual machines 530 and 540 (STn9).

Subsequently, each of the input and output client interfaces 532 and 542 transmits the result of buffering to the application that is executed (STn10).

The application that is executed may be configured to display a related image using the image data processed by the second signal processing device 170b corresponding to the result of buffering (STn11).

For example, the second virtual machine 530 and the third virtual machine 540 may be configured to combine the received image data with self-processed image data, and display composite images on the displays 180a and 180c, respectively.

Consequently, images divided and processed by the plurality of signal processing devices 170 and 170b in the vehicle may be displayed. In addition, the plurality of signal processing devices 170 and 170b in the vehicle may efficiently manage loads or resources.

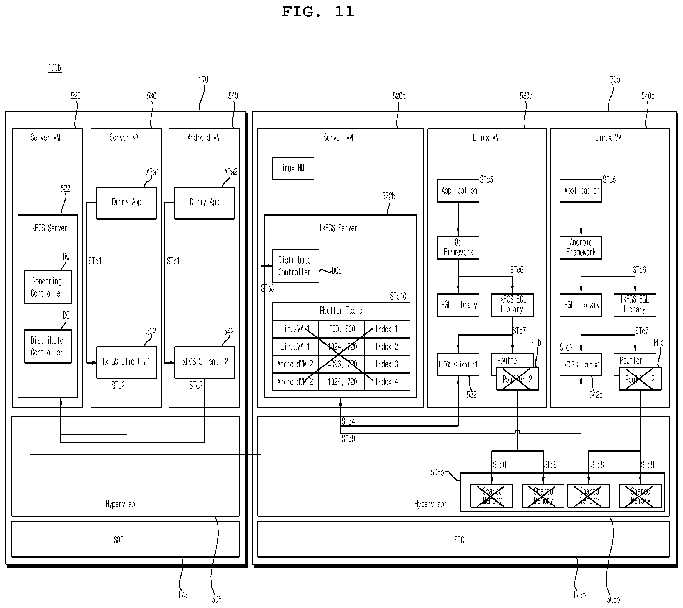

Next, FIG. 11 is a view showing another example of the system executed in the display apparatus for vehicles according to the embodiment of the present disclosure. In particular, this figure is referred to for a description related to termination of an application in the second signal processing device 170b.

Referring to the figure, in response to the dummy applications Apa1 and Apa2 being executed in the second and third virtual machines 530 and 540, respectively, the dummy applications Apa1 and Apa2 transmit a remote processing request to the input and output client interfaces 532 and 542, respectively, (STc1).

Subsequently, the input and output client interfaces 532 and 542 transmit the remote processing request to the input and output server interface 522 in the first virtual machine 520 (STc2).

Subsequently, the input and output server interface 522 in the first virtual machine 520 is configured to transmit the request message to the server interface 522b in the server virtual machine 520b in the second signal processing device 170b (STc3).

In particular, the input and output server interface 522 in the first virtual machine 520 is configured to transmit the request message to the distribute controller DCb in the input and output server interface 522b in the second signal processing device 170b.

At this time, the request message may include an application termination request.

Subsequently, the server interface 522b in the server virtual machine 520b in the second signal processing device 170b divides the request message for the guest virtual machines 530b and 540b that will process the request message, and transmits the request message to the guest virtual machines 530b and 540b (STc4).

Subsequently, upon receiving the request message including the application termination request, each of the guest virtual machines 530b and 540b terminates the application that is executed (STc5).

Subsequently, at the time of creating a surface, each of the guest virtual machines 530b and 540b transmits the request message to the interface-related library (STc6), and detects the created buffer (STc7).

Subsequently, each of the guest virtual machines 530b and 540b also deletes the information mapped and stored in the shared memory 508b (STc8).

Subsequently, each of the guest virtual machines 530b and 540b transmits buffer index information in the shared memory 508b to the server virtual machine 520b (STc9).

Subsequently, the server virtual machine 520b deletes the buffer table therein based on the received buffer index information (STc10).

Consequently, the application executed in the second signal processing device 170b may be terminated.

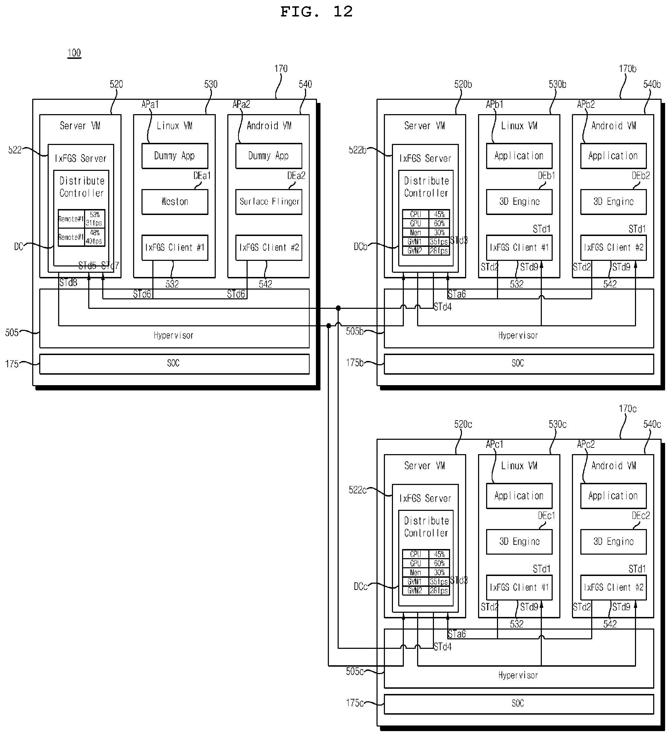

Next, FIG. 12 is a view showing another example of the system executed in the display apparatus for vehicles according to the embodiment of the present disclosure. In particular, this figure is referred to for a description related to load balancing.

Referring to the figure, a display apparatus 100 for vehicles according to an embodiment of the present disclosure includes a signal processing device 170, a second signal processing device 170b, and a third signal processing device 170c.

The figure illustrates that the second signal processing device 170b and the third signal processing device 170c process image data through guest virtual machines 530c, 540b, 530c, and 540c.

Meanwhile, each of the guest virtual machines 530c, 540b, 530c, and 540c may calculate a rendering frame rate at the time of processing the image data, i.e. at the time of rendering (STd1).

Subsequently, the guest virtual machines 530c, 540b, 530c, and 540c of the second signal processing device 170b and the third signal processing device 170c may transmit the calculated rendering frame rate to server virtual machines 520b and 520c (STd2).

Subsequently, input and output server interfaces 522b and 522c in the server virtual machines 520b and 520c of the second signal processing device 170b and the third signal processing device 170c calculate loads or resources of each signal processing device (STd3).

For example, the server virtual machines 520b and 520c of the second signal processing device 170b and the third signal processing device 170c may extract and calculate usage of a CPU, a GPU, and a memory in each signal processing device.

Subsequently, the input and output server interfaces 522b and 522c in the server virtual machines 520b and 520c of the second signal processing device 170b and the third signal processing device 170c transmit load or resource information of each signal processing device to an input and output server interface 522 of a first virtual machine 520 of the signal processing device 170 (STd4).

Subsequently, the first virtual machine 520 of the signal processing device 170 calculates load balancing or resource balancing of each signal processing device based on the load or resource information of each signal processing device (STd5).

Meanwhile, input and output client interfaces 532 and 542 in second and third virtual machines 530 and 540 may transmit a remote processing request to the input and output server interface 522 of the first virtual machine 520 according to execution of dummy applications Apa1 and Apa2 (STd6).

The first virtual machine 520 of the signal processing device 170 distributes the remote processing request to the second signal processing device 170b and the third signal processing device 170c based on the remote processing request and the calculated load balancing or resource balancing (STd7).

The input and output server interface 522 in the first virtual machine 520 of the signal processing device 170 transmits the distributed remote processing request to the second signal processing device 170b and the third signal processing device 170c (STd8).

Subsequently, the input and output server interfaces 522b and 522c in the second signal processing device 170b and the third signal processing device 170c may receive a request message, and may distribute the request message so as to be processed by the guest virtual machines 530c, 540b, 530c, and 540c (STd9).

Accordingly, the second signal processing device 170b and the third signal processing device 170c may divide and process image data based on the load balancing or the resource balancing. Consequently, the plurality of signal processing devices 170a, 170b, and 170c may efficiently manage loads or resources.

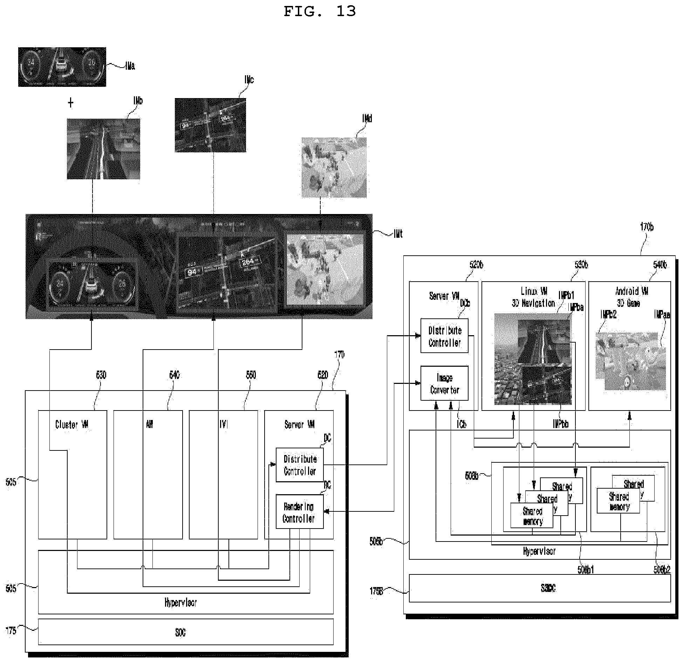

FIG. 13 is a view showing an example of image display in the display apparatus for vehicles according to the embodiment of the present disclosure.

Referring to the figure, the display apparatus 100 for vehicles may include a signal processing device 170 and a second signal processing device 170b for image display.

The signal processing device 170 may include a processor 175 configured to execute a first virtual machine 520, which corresponds to a server virtual machine, and second to fourth virtual machines 530 to 550, which correspond to guest virtual machines.

The second virtual machine 530 may perform signal processing for cluster display, the third virtual machine 540 may perform signal processing for AVN or CID display, and the fourth virtual machine 550 may perform signal processing for IVI display.

Meanwhile, the first virtual machine 520 may include a rendering controller RC configured to perform rendering control and a distribute controller DC configured to perform distributed control in consideration of loads or resources of guest virtual machines 530b and 540b in the second signal processing device 170b.

The first virtual machine 520 may transmit image data to be divided and processed to a server virtual machine 520b executed in a second processor 175b in the second signal processing device 170b.

A distribute controller DCb in the server virtual machine 520b of the second signal processing device 170b may receive image data to be processed, and may transmit the received image data to the guest virtual machines 530b and 540b in the second signal processing device 170b.

The first guest virtual machine 530b in the second signal processing device 170b may perform image signal processing, and may transmit the processed image data IMPba and IMPbb to the server virtual machine 520b.

Meanwhile, the guest virtual machines 530b and 540b in the second signal processing device 170b may process image data IMPb1 by itself, in addition to the image data IMPba and IMPbb processed according to a request.

Meanwhile, the second guest virtual machine 540b in the second signal processing device 170b may perform image signal processing, and may transmit the processed image data IMPb2 and IMPaa to the server virtual machine 520b.

The server virtual machine 520b may convert the received image data IMPba and IMPbb and the received image data IMPb2 and IMPaa through an image converter ICb therein.

The server virtual machine 520b may transmit the converted image data to the rendering controller RC in the first virtual machine 520.

The rendering controller RC in the first virtual machine 520 distributes the received image data IMPba, IMPbb, IMPb2, and IMPaa, and transmits the distributed image data to the second to fourth virtual machines 530 to 550.

The second virtual machine 530 may combine received image data IBb and vehicle driving-related image data IMa with each other, and may be configured to display a composite image on the cluster display.

Meanwhile, the third virtual machine 540 may be configured to display an image related to received image data Imc related to a map on the AVN or CID display.

Meanwhile, the fourth virtual machine 550 may be configured to display an image related to received image data Imd related to a game on the IVI display.

Consequently, images divided and processed by the plurality of signal processing devices 170 and 170b in the vehicle may be displayed. In addition, the plurality of signal processing devices 170 and 170b in the vehicle may efficiently manage loads or resources.

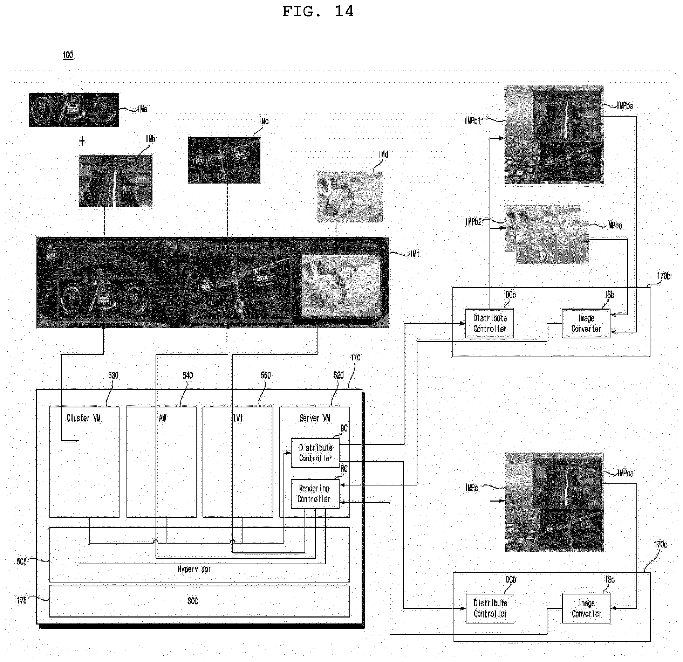

FIG. 14 is a view showing another example of image display in the display apparatus for vehicles according to the embodiment of the present disclosure.

Referring to the figure, the display apparatus 100 for vehicles may include a signal processing device 170, a second signal processing device 170b, a third signal processing device 170c for image display.

The operation of the signal processing device 170 is the same to the operation of the signal processing device 170 described with reference to FIG. 13, and therefore a description thereof will be omitted.

Meanwhile, the second signal processing device 170b may include a distribute controller DCb configured to perform distributed control and an image converter ISb configured to perform image conversion.

Meanwhile, the third signal processing device 170c may include a distribute controller DCc configured to perform distributed control and an image converter ISc configured to perform image conversion.

The first virtual machine 520 may transmit image data to be divided and processed to the distribute controller DCb in the second signal processing device 170b.

The distribute controller DCb in the second signal processing device 170b may receive image data to be processed, may perform image signal processing on the received image data in the second signal processing device 170b, and may transmit the processed image data IMPba and IMPbb to the image converter ISb.

The image converter ISb in the second signal processing device 170b may convert the image data IMPba and IMPbb, and may transmit the converted image data to a rendering controller RC in the first virtual machine 520.

Meanwhile, the first virtual machine 520 may transmit image data to be divided and processed to a distribute controller DCc in the third signal processing device 170c.

The distribute controller DCc in the third signal processing device 170c may receive image data to be processed, may perform image signal processing on the received image data in the third signal processing device 170c, and may transmit the processed image data IMPca to an image converter ISc.

The image converter ISc in the third signal processing device 170c may convert the image data IMPca, and may transmit the converted image data to the rendering controller RC in the first virtual machine 520.

The rendering controller RC in the first virtual machine 520 distributes the received image data IMPba, IMPbb, and IMPca, and transmits the distributed image data to the second to fourth virtual machines 530 to 550.

The second virtual machine 530 may combine received image data IBb and vehicle driving-related image data IMa with each other, and may be configured to display a composite image on the cluster display.

Meanwhile, the third virtual machine 540 may be configured to display an image related to received image data Imc related to a map on the AVN or CID display.

Meanwhile, the fourth virtual machine 550 may be configured to display an image related to received image data Imd related to a game on the IVI display.

Consequently, images divided and processed by the plurality of signal processing devices 170 and 170b in the vehicle may be displayed. In addition, the plurality of signal processing devices 170 and 170b in the vehicle may efficiently manage loads or resources.

Meanwhile, each of the second signal processing device 170b and the third signal processing device 170c shown in the figure may be operated as a cartridge.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A display apparatus for vehicles, the display apparatus comprising:
a first display and a second display located in a vehicle;
a signal processing device comprising a processor configured to perform signal processing for the first display and the second display; and
a second signal processing device comprising a second processor configured to perform signal processing for a third display, wherein
the processor in the signal processing device executes first to third virtual machines on a hypervisor in the processor, and
the first virtual machine is configured to transmit a remote processing request from at least one of the second virtual machine or the third virtual machine to the second signal processing device, receive image data processed by the second signal processing device in response to the remote processing request, and display an image related to the received image data on at least one of the first display or the second display.

2. The display apparatus of claim 1, wherein
the second virtual machine is operated for the first display,
the third virtual machine is operated for the second display, and
in response to the remote processing request for image processing being received from at least one of the second virtual machine or the third virtual machine, the first virtual machine is configured to transmit the remote processing request to the second signal processing device, receive image data processed by the second signal processing device in response to the remote processing request, transmits the received image data to at least one of the second virtual machine or the third virtual machine, and display an image related to the image data on at least one of the first display or the second display.

3. The display apparatus of claim 1, wherein
the first virtual machine is configured to transmit the remote processing request to a server virtual machine executed in the second signal processing device,
the server virtual machine in the second signal processing device is configured to process image data in a guest virtual machine in the second signal processing device in response to the remote processing request and transmits the processed image data to the first virtual machine, and
the first virtual machine is configured to receive the image data processed by the second signal processing device and display an image related to the received image data on at least one of the first display or the second display.

4. The display apparatus of claim 3, wherein the server virtual machine in the second signal processing device sorts image data to be processed by a plurality of guest virtual machines in the second signal processing device in consideration of load balancing or resource balancing of the plurality of guest virtual machines, and transmits the sorted image data to be processed to the plurality of guest virtual machines.

5. The display apparatus of claim 1, wherein the first virtual machine sorts image data to be processed by the second signal processing device in consideration of load balancing or resource balancing of the second signal processing device, and transmits the sorted image data to be processed to the second signal processing device.

6. The display apparatus of claim 1, wherein the signal processing device further executes a distributed processing module configured to sort image data to be processed by the second signal processing device in consideration of load balancing or resource balancing of the second signal processing device and to transmit the sorted image data to be processed to the second signal processing device.

7. The display apparatus of claim 1, wherein the image data processed by the second signal processing device comprises a rendering object.

8. The display apparatus of claim 1, wherein an operating system executed in the signal processing device and an operating system executed in the second signal processing device are different from each other.

9. The display apparatus of claim 1, wherein the first virtual machine is configured to combine image data processed by the signal processing device and the image data processed by the second signal processing device with each other, and display a composite image on at least one of the first display or the second display.

10. The display apparatus of claim 1, wherein the first virtual machine receives and processes wheel speed sensor data of the vehicle, and transmits the processed wheel speed sensor data to at least one of the second virtual machine or the third virtual machine, or the second signal processing device.

11. The display apparatus of claim 3, wherein the guest virtual machine in the second signal processing device stores the processed image data in a shared memory, and transmits buffer index information in the shared memory to the server virtual machine in the second signal processing device.

12. The display apparatus of claim 11, wherein the server virtual machine in the second signal processing device transmits the processed image data to the first virtual machine based on the buffer index information in the shared memory.

13. The display apparatus of claim 1, further comprising:
a third signal processing device comprising a third processor configured to perform signal processing for a fourth display, wherein
the first virtual machine is configured to transmit the remote processing request from at least one of the second virtual machine or the third virtual machine to the second signal processing device and the third signal processing device, receive image data processed by each of the second signal processing device and the third signal processing device in response to the remote processing request, and display an image related to the received image data on at least one of the first display or the second display.

14. The display apparatus of claim 13, wherein
the first virtual machine is configured to transmit the remote processing request to a server virtual machine executed in each of the second signal processing device and the third signal processing device,
the server virtual machine in the second signal processing device is configured to process image data by a guest virtual machine in the second signal processing device in response to the remote processing request and transmits the processed image data to the first virtual machine,
the server virtual machine in the third signal processing device is configured to process image data by a guest virtual machine in the third signal processing device in response to the remote processing request and transmits the processed image data to the first virtual machine, and
the first virtual machine receives the image data processed by each of the second signal processing device and the third signal processing device and is configured to display an image related to the received image data on at least one of the first display or the second display.

15. The display apparatus of claim 13, wherein the first virtual machine sorts image data to be processed by each of the second signal processing device and the third signal processing device in consideration of load balancing or resource balancing of each of the second signal processing device and the third signal processing device, and transmits the sorted image data to be processed to each of the second signal processing device and the third signal processing device.

16. The display apparatus of claim 13, wherein the signal processing device further executes a distributed processing module configured to sort image data to be processed by each of the second signal processing device and the third signal processing device in consideration of load balancing or resource balancing of each of the second signal processing device and the third signal processing device and to transmit the sorted image data to be processed to each of the second signal processing device and the third signal processing device.

17. A display apparatus for vehicles, the display apparatus comprising:
a first display and a second display located in a vehicle;
a signal processing device comprising a processor configured to perform signal processing for the first display and the second display;
a second signal processing device comprising a second processor configured to perform signal processing for a third display; and
a third signal processing device comprising a third processor configured to perform signal processing for a fourth display, wherein
the processor in the signal processing device executes first to third virtual machines on a hypervisor in the processor, and
the first virtual machine sorts image data to be processed by a plurality of guest virtual machines in consideration of load balancing or resource balancing of each of the second signal processing device and the third signal processing device, and transmits the sorted image data to be processed to each of the plurality of guest virtual machines.

18. The display apparatus of claim 17, wherein the first virtual machine receives image data processed by each of the second signal processing device and the third signal processing device, and is configured to display an image related to the received image data on at least one of the first display or the second display.
